(19) Europäisches Patentamt
European Patent Office
Office européen des brevets

(11) **EP 4 597 788 A1**

(12) **EUROPEAN PATENT APPLICATION**

(43) Date of publication:
**06.08.2025 Bulletin 2025/32**

(21) Application number: **25154499.5**

(22) Date of filing: **28.01.2025**

(51) International Patent Classification (IPC):
***H02J 7/00*** *(2006.01)*

(52) Cooperative Patent Classification (CPC):
**H02J 7/00; H01M 10/425; H02J 7/0014;
H02J 7/0016; H02J 7/0019; H02J 7/0048;
H02J 7/0068;** H01M 2010/4271

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2024 CN 202410138660**

(71) Applicant: **Huawei Digital Power Technologies
Co., Ltd.
Shenzhen, Guangdong 518043 (CN)**

(72) Inventors:
• **CHEN, Yue**
**Shenzhen 518043 (CN)**
• **TUO, Hong**
**Shenzhen 518043 (CN)**
• **LIU, Xiaoyu**
**Shenzhen 518043 (CN)**
• **ZHANG, Tianhui**
**Shenzhen 518043 (CN)**

(74) Representative: **Gill Jennings & Every LLP
The Broadgate Tower
20 Primrose Street
London EC2A 2ES (GB)**

(54) **BATTERY PACK**

(57) This application provides a battery pack. The battery pack includes a battery unit, a switch unit, a power balancing circuit, and a sampling circuit. The battery unit includes N electrochemical cells that are connected in series, and the switch unit includes N+1 switches, where N is an integer greater than or equal to 2. First ends of any two adjacent switches in the N+1 switches are respectively connected to two ends of one of the N electrochemical cells, and second ends of the any two adjacent switches are respectively connected to a first end and a second end of the switch unit. Both the sampling circuit and the power balancing circuit are connected to the first end and the second end of the switch unit. The sampling circuit is configured to obtain a power parameter of each of the N electrochemical cells by turning on or off the N+1 switches. The power balancing circuit is configured to perform power balancing on at least one electrochemical cell in the N electrochemical cells based on the N power parameters obtained by the sampling circuit, so that a power difference between the N electrochemical cells is reduced after the at least one electrochemical cell is charged or discharged, an inconsistency between the electrochemical cells is reduced, and a service life of the battery pack is improved.

FIG. 1

## Description

## TECHNICAL FIELD

This application relates to the field of power electronics technologies, and in particular, to a battery pack.

## BACKGROUND

An energy storage system is a system that uses an electrochemical battery as an energy storage carrier to store electric energy within a specific period of time and supply electric energy within a specific period of time. The energy storage system can work with a power generation system and is widely used in various scenarios. The energy storage system may include a battery cell (also referred to as an electrochemical cell) that can be charged and discharged. Generally, the electrochemical cell has a low voltage and small capacity. To improve backup power capacity and adapt to a voltage level of the power generation system, a plurality of electrochemical cells may be connected in series.

In actual application, due to limitations of conditions such as chemical characteristics, physical characteristics, and manufacturing processes of electrochemical cells, duration for the electrochemical cells to be fully charged or fully discharged is different, resulting in a capacity inconsistency between the electrochemical cells in a battery pack. However, overall capacity of the battery pack is determined by minimum capacity of an electrochemical cell in the battery pack. This weakness effect becomes more obvious when a quantity of cycles increases. Therefore, the capacity inconsistency between the electrochemical cells in the battery pack easily causes the overall capacity of the battery pack to decrease, and affects a service life of the battery pack. To resolve this problem, a balancing technology needs to be used for the battery pack to reduce the inconsistency between the electrochemical cells.

## SUMMARY

This application provides a battery pack, which can reduce an inconsistency between electrochemical cells in the battery pack and improve a service life of the battery pack.

According to a first aspect, this application provides a battery pack. The battery pack includes a battery unit, a switch unit, a power balancing circuit, and a sampling circuit. The battery unit includes N electrochemical cells that are connected in series, and the switch unit includes N+1 switches, where N is an integer greater than or equal to 2. First ends of any two adjacent switches in the N+1 switches are respectively connected to two ends of one of the N electrochemical cells, and second ends of the any two adjacent switches are respectively connected to a first end and a second end of the switch unit. Herein, because the N electrochemical cells are connected in series, switches that two ends of each electrochemical cell are respectively connected to may be referred to as two adjacent switches. Both the sampling circuit and the power balancing circuit are connected to the first end and the second end of the switch unit. The sampling circuit may be configured to obtain a power parameter of each of the N electrochemical cells by turning on or off the N+1 switches. Herein, the power parameter of the electrochemical cell may include but is not limited to parameters such as an SOC, a voltage, and a current of the electrochemical cell. The power balancing circuit may be configured to perform power balancing on at least one electrochemical cell in the N electrochemical cells based on the N power parameters obtained by the sampling circuit, so that a power difference between the N electrochemical cells is reduced after the at least one electrochemical cell is charged or discharged.

In this application, the sampling circuit and the power balancing circuit in the battery pack are connected to the N electrochemical cells through a reused switch unit, which can reduce a quantity of switches required in the battery pack, reduce circuit costs, and facilitate integration. Power conditions of each of the N electrochemical cells in the battery pack may be obtained based on the N power parameters obtained by the sampling circuit. In addition, power balancing is performed on the at least one electrochemical cell based on a specific power condition, so that the power difference between the N electrochemical cells can be reduced, thereby reducing an inconsistency between the N electrochemical cells and improving durability and available capacity of the entire battery pack.

In a feasible design, the sampling circuit performs, at an interval of first duration, sampling again after each sampling ends. In each sampling process, the sampling circuit is configured to: within second duration, obtain the power parameter of each of the N electrochemical cells by turning on or off the N+1 switches. After single sampling by the sampling circuit ends, the power balancing circuit is configured to: within the first duration after the sampling process, perform power balancing on the at least one electrochemical cell in the N electrochemical cells based on the N power parameters obtained by the sampling circuit in the sampling process. In this way, sampling may be performed again after balancing is performed for a period of time, to determine whether balancing is needed. This helps make the power balancing circuit stop working in time after balancing is completed, thereby improving balancing efficiency and avoiding over-balancing. In addition, the inconsistency between the electrochemical cells can be reduced, safety of the battery pack can be improved, and capacity and the durability of the entire battery pack can be improved.

In a feasible design, the power balancing circuit includes a first balancing circuit. The first balancing circuit may be configured to: when the N electrochemical cells include a first electrochemical cell, perform power balancing on the first electrochemical cell. A difference between a power parameter of the first electrochemical cell and an average value of the N power parameters is greater than a first threshold. Herein, the first electrochemical cell is an electrochemical cell with a large power parameter in the N electrochemical cells. Performing power balancing on the first electrochemical cell refers to performing passive balancing on the first electrochemical cell, so that the first electrochemical cell is discharged. Performing power balancing on the first electrochemical cell may enable the first electrochemical cell to release a part of electric energy. After balancing, the power parameter of the first electrochemical cell is reduced, so that the difference between the power parameter of the first electrochemical cell and the average value of the power parameters of all electrochemical cells is reduced, thereby reducing the inconsistency between the N electrochemical cells and improving the available capacity and a service life of the entire battery pack.

In a feasible design, the power balancing circuit includes a second balancing circuit. The second balancing circuit may be configured to: when the N electrochemical cells include a second electrochemical cell, perform power balancing on the second electrochemical cell. A difference between an average value of the N power parameters and a power parameter of the second electrochemical cell is greater than a second threshold. Herein, the second electrochemical cell is an electrochemical cell with a small power parameter in the N electrochemical cells. Performing power balancing on the second electrochemical cell refers to performing active balancing on the second electrochemical cell, so that the second electrochemical cell is charged. Performing power balancing on the second electrochemical cell can supplement electric energy to the second electrochemical cell, so that the difference between the power parameter of the second electrochemical cell and the average value of the power parameters of all electrochemical cells in the battery pack is reduced, thereby reducing the inconsistency between the electrochemical cells and improving the available capacity and a service life of the entire battery pack.

In a feasible design, the power balancing circuit includes a first balancing circuit and a second balancing circuit. Both the second balancing circuit and the first balancing circuit are connected to the first end and the second end of the switch unit. The first balancing circuit may be configured to: when the N electrochemical cells include a first electrochemical cell but do not include a second electrochemical cell, perform power balancing on the first electrochemical cell. A difference between a power parameter of the first electrochemical cell and an average value of the N power parameters is greater than a first threshold. A difference between the average value of the N power parameters and a power parameter of the second electrochemical cell is greater than a second threshold. The second electrochemical cell is different from the first electrochemical cell. The second balancing circuit may be configured to: when the N electrochemical cells include the second electrochemical cell but do not include the first electrochemical cell, perform power balancing on the second electrochemical cell. In this way, the two balancing circuits in the battery pack may respectively implement an active balancing function and a passive balancing function, so that power of both a high-power electrochemical cell and a low-power electrochemical cell can approach the average power value of all electrochemical cells, thereby improving the balancing efficiency and helping improve a service life of the battery pack.

In a feasible design, when the N electrochemical cells include the first electrochemical cell and the second electrochemical cell, and a first difference is greater than a second difference, the first balancing circuit is further configured to perform power balancing on the first electrochemical cell within the first duration after the sampling process. The first difference is the difference between the power parameter of the first electrochemical cell and the average value of the N power parameters. The second difference is the difference between the average value of the N power parameters and the power parameter of the second electrochemical cell. When the N electrochemical cells include the first electrochemical cell and the second electrochemical cell, and the first difference is less than the second difference, the second balancing circuit is further configured to perform power balancing on the second electrochemical cell within the first duration after the sampling process. In this way, when the N electrochemical cells include the first electrochemical cell and the second electrochemical cell, based on a magnitude relationship between the first difference and the second difference, the first balancing circuit or the second balancing circuit is enabled to preferentially work. Then, power balancing can be performed on an electrochemical cell whose power parameter more greatly differs from the average value of the N power parameters, thereby more quickly reducing the power difference between the electrochemical cells, reducing the inconsistency between the electrochemical cells, and improving the available capacity and the service life of the entire battery pack.

In a feasible design, when the N electrochemical cells include the first electrochemical cell and the second electrochemical cell, the first balancing circuit and the second balancing circuit are further configured to alternately work within the first duration after the sampling process. In this way, not only passive balancing can be performed on the high-power electrochemical cell, but also active balancing can be performed on the low-power electrochemical cell, so that the power of both the high-power electrochemical cell and the low-power electrochemical cell can approach the average power value of all electrochemical cells. Consequently, the power difference between the electrochemical cells can be more quickly reduced, thereby improving the balancing efficiency, helping reduce the inconsistency between the electrochemical cells, and improving the available capacity and the service life of the battery pack.

In a feasible design, when the N electrochemical cells include the first electrochemical cell and the second electrochemical cell after the sampling process or a previous sampling process of the sampling process ends, and the first balancing circuit works within the first duration following the previous sampling process, the second balancing circuit is further configured to work within the first duration after the sampling process. When the N electrochemical cells include the first electrochemical cell and the second electrochemical cell after the sampling process or the previous sampling process of the sampling process ends, and the second balancing circuit works within the first duration following the previous sampling process, the first balancing circuit is further configured to work within the first duration after the sampling process. In this way, the first balancing circuit and the second balancing circuit are enabled to alternately work after a plurality of consecutive times of sampling, and not only passive balancing can be performed on the high-power electrochemical cell, but also active balancing can be performed on the low-power electrochemical cell, so that the power of both the high-power electrochemical cell and the low-power electrochemical cell can approach the average power value of all electrochemical cells. Consequently, the power difference between the electrochemical cells can be more quickly reduced, thereby improving the balancing efficiency, helping reduce the inconsistency between the electrochemical cells, and improving the available capacity and the service life of the battery pack.

In a feasible design, the first balancing circuit includes a first balancing switch and a second balancing resistor that are connected in series. The first balancing switch and the first balancing resistor that are connected in series are connected between the first end and the second end of the switch unit. The first balancing circuit is simple in structure and requires a few components. The first balancing circuit is connected between the first end and the second end of the switch unit, and the first balancing circuit may be used to perform power balancing on any one of the N electrochemical cells, thereby greatly reducing a quantity of elements and facilitating integration.

In a feasible design, the second balancing circuit includes an energy storage element and a second balancing switch. The energy storage element and the second balancing switch are connected between the first end and the second end of the switch unit. The energy storage element includes a capacitor, an inductor, or a capacitor and an inductor that are connected in series. In this way, the energy storage element in the second balancing circuit may store some energy of the high-power electrochemical cell in the N electrochemical cells, and release the energy to the low-power electrochemical cell in the N electrochemical cells. Thus, energy between the electrochemical cells is transferred, and a difference between power of the second electrochemical cell and an average power value of the N electrochemical cells is reduced, thereby reducing the inconsistency between the electrochemical cells and improving the available capacity and the service life of the battery pack.

In a feasible design, the second balancing circuit includes a direct current converter circuit. A first end and a second end of the direct current converter circuit are respectively connected to the first end and the second end of the switch unit. A third end and a fourth end of the direct current converter circuit are configured to connect to a power supply. A topology of the direct current converter circuit may be of various types like a forward converter topology, a flyback converter topology, a buck (BUCK) converter topology, a boost (BOOST) converter topology, or the like. In this way, the direct current converter circuit can supplement energy provided by the power supply to the second electrochemical cell, so that the difference between the power of the second electrochemical cell and the average power value of all electrochemical cells in the battery pack is reduced, thereby reducing the inconsistency between the electrochemical cells and improving the available capacity and the service life of the entire battery pack.

In a feasible design, the power supply includes an external power supply. The external power supply is located outside the battery pack. In this way, the external power supply may be used to perform active balancing on the low-power second electrochemical cell in the battery pack, so that the second electrochemical cell quickly obtains energy, and the inconsistency between the electrochemical cells can be reduced, thereby improving the capacity and the durability of the battery pack. Alternatively, the third end and the fourth end of the direct current converter circuit may be connected to the battery unit. In this way, energy of all electrochemical cells in the battery unit may be used to supplement energy to the second electrochemical cell, thereby implementing active balancing. In addition, no external power supply needs to be connected, and the circuit can be simplified and be easy to use, thereby improving the capacity of the battery pack and increasing the balancing efficiency.

In a feasible design, the second balancing circuit is configured to adjust a switch duty cycle in the second balancing circuit based on a balancing speed requirement and the power parameters of the N electrochemical cells, to increase or decrease a balancing current. In this way, the balancing current may be adjusted based on an actual requirement, and the balancing speed and time may be controlled, thereby reducing a quantity of balancing times and simplifying an operation.

In a feasible design, the sampling circuit or any balancing circuit in the battery pack works when any switch in the switch unit is turned on. In this way, the sampling circuit, the first balancing circuit, and the second balancing circuit in the battery pack work in different periods of time. Then, the switch unit can be reused, both active balancing and passive balancing can be implemented, and power of the high-power electrochemical cell and the low-power electrochemical cell can both approach the average power value, thereby improving the balancing speed and efficiency, helping reduce the inconsistency between the electrochemical cells, and improving the capacity and the durability of the entire battery pack.

In a feasible design, when the battery pack meets a fault condition, all balancing circuits in the battery pack stop working. The fault condition includes any one of the following: the sampling circuit is faulty; any one of the N power parameters obtained by the sampling circuit is greater than a third threshold; any one of the N power parameters obtained by the sampling circuit is less than a fourth threshold; a path between the sampling circuit and the switch unit is disconnected; and an environmental parameter of the battery pack exceeds a preset range. Herein, the environmental parameter may include but is not limited to an ambient temperature, ambient humidity, and the like. In this way, the balancing circuit in the battery pack can stop working in time when a fault occurs, so that a possibility of overcharge or overdischarge of the electrochemical cell in the battery pack can be reduced, and safety and the service life of the battery pack can be improved.

According to a second aspect, this application further provides an energy storage system. The energy storage system includes a plurality of battery packs according to any one of the first aspect or the feasible designs of the first aspect. The plurality of battery packs may be connected in series or connected in parallel. After being connected in parallel, the plurality of battery packs may be configured to supply power to a load.

According to a third aspect, this application further provides an energy storage system. The energy storage system includes a power converter and the battery pack according to any one of the first aspect or the feasible designs of the first aspect. A direct current end of the power converter is connected to the battery pack. An alternating current end of the power converter is configured to connect to an alternating current power grid. When the battery pack is discharged, the power converter is configured to perform direct current-alternating current conversion based on electric energy provided by the battery pack, and output an alternating current to the alternating current power grid. When the battery pack is charged, the power converter is configured to perform alternating current-direct current conversion based on electric energy provided by the alternating current power grid, and output a direct current to the battery pack.

In the energy storage system, a sampling circuit and a power balancing circuit in each battery pack are both connected to a plurality of electrochemical cells in the battery pack through a switch unit. The power balancing circuit may perform power balancing on the electrochemical cells based on power conditions, which are obtained by the sampling circuit, of all electrochemical cells. When the sampling circuit and the power balancing circuit work, switches in the switch unit may be reused. Therefore, the battery pack can save a large quantity of switches and reduce costs. Balancing can increase available capacity of the battery pack, thereby improving a service life and reliability of the energy storage system.

## BRIEF DESCRIPTION OF DRAWINGS

FIG. 1 is a diagram of an application scenario of an energy storage system according to this application;
FIG. 2 is a diagram of another application scenario of an energy storage system according to this application;
FIG. 3 is a schematic of a structure of a battery pack according to this application;
FIG. 4 is a schematic of another structure of a battery pack according to this application;
FIG. 5 is a schematic of still another structure of a battery pack according to this application;
FIG. 6 is a schematic of still another structure of a battery pack according to this application;
FIG. 7 is a schematic of a structure of a first balancing circuit in a battery pack according to this application;
FIG. 8 is a schematic of a structure of a second balancing circuit in a battery pack according to this application; and
FIG. 9 is a schematic of another structure of a second balancing circuit in a battery pack according to this application.

## DESCRIPTION OF EMBODIMENTS

A battery pack and an energy storage system provided in this application may be applied to a plurality of application scenarios that have energy storage requirements such as new energy-based power generation, household power consumption, industrial and commercial power consumption, and a new energy vehicle.

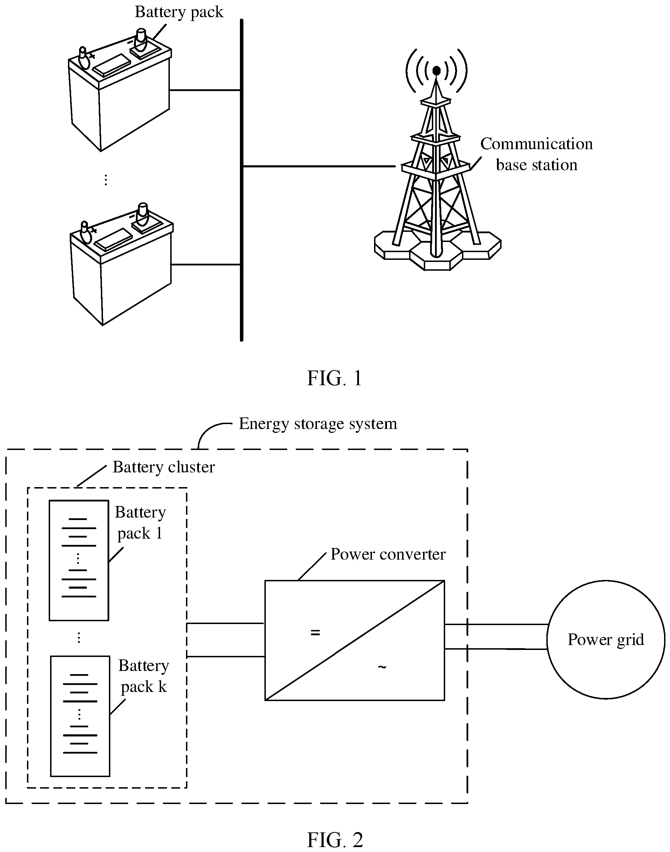

FIG. 1 is a diagram of an application scenario of an energy storage system. As shown in FIG. 1, the energy storage system may include a plurality of battery packs. The plurality of battery packs may be connected in parallel to a direct current bus, and are connected to a load through the direct current bus. A battery pack may include a plurality of electrochemical cells that are connected in series. The electrochemical cells may be of types like a ternary lithium battery, a lead-acid battery, a lithium iron phosphate battery, a lithium titanium battery, a lead carbon battery, a supercapacitor, or a combination of the foregoing types. Details are not described in the following. Herein, the plurality of battery packs may transfer electric energy to the direct current bus, and provide the electric energy for the load through the direct current bus. The load may include various power-consuming loads such as communication base stations or home devices. In FIG. 1, an example in which the load is the communication base station is used.

FIG. 2 is a diagram of another application scenario of an energy storage system. As shown in FIG. 2, the energy storage system may include a power converter and a battery pack. There may be one or more battery packs (for example, a battery pack 1 to a battery pack k in FIG. 2, where k may be an integer greater than or equal to 1). In the energy storage system, a direct current end of the power converter may be connected to each battery pack. An alternating current end of the power converter may be configured to connect to an alternating current power grid. The one or more battery packs may be connected in series or connected in parallel. Each battery pack may include a plurality of electrochemical cells that are connected in series. In FIG. 2, an example in which the k battery packs are connected in series is used. In this case, the k battery packs may be connected in series to form a battery cluster. When the battery pack in the energy storage system is discharged, the power converter may be configured to perform direct current-alternating current conversion based on electric energy provided by the battery pack, and output an alternating current to the alternating current power grid. When the battery pack in the energy storage system is charged, the power converter may be configured to perform alternating current-direct current conversion based on electric energy provided by the alternating current power grid, and output a direct current to the battery pack, to charge the battery pack.

In the energy storage system, a switch unit, a sampling circuit, and a power balancing circuit may be disposed in the battery pack. The sampling circuit and the power balancing circuit in each battery pack are both connected to the plurality of electrochemical cells in the battery pack through the switch unit. Power balancing is performed on the electrochemical cells based on power conditions, which are obtained by the sampling circuit, of all electrochemical cells. When the sampling circuit and the power balancing circuit work, switches in the switch unit may be reused. Therefore, the battery pack can save a large quantity of switches and reduce costs. Balancing can increase available capacity of the battery pack, and balancing efficiency is high. When capacity and a service life of the battery pack are increased, a service life and reliability of the energy storage system are improved.

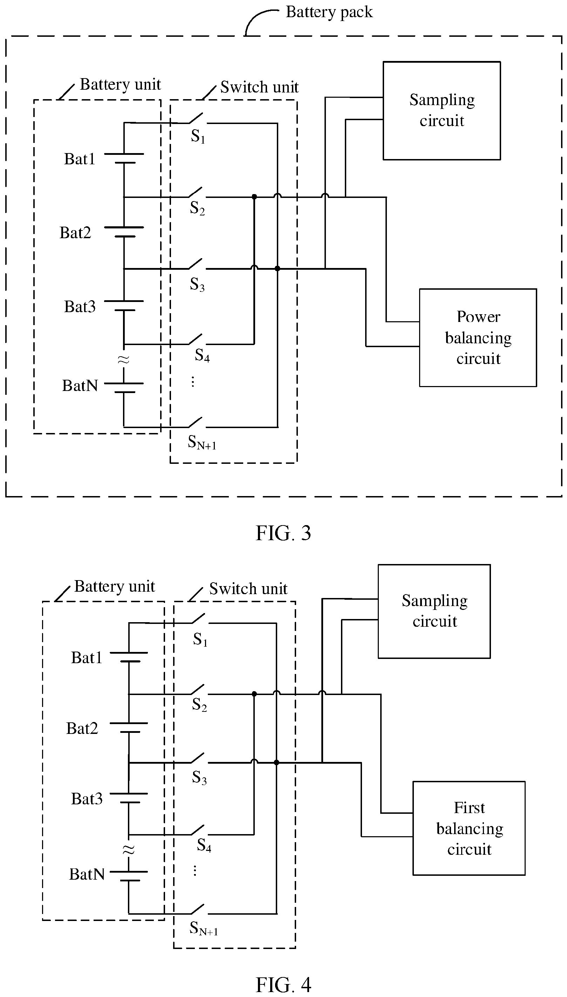

The following, with reference to FIG. 3 to FIG. 9, describes a battery pack provided in this application.

FIG. 3 is a schematic of a structure of the battery pack according to this application. As shown in FIG. 3, the battery pack may include a battery unit, a switch unit, a power balancing circuit, and a sampling circuit. The battery unit may include N electrochemical cells (for example, Bat1 to BatN in FIG. 3) that are connected in series, and the switch unit may include N+1 switches (for example, $S_1$ to $S_{N+1}$ in FIG. 3), where N may be an integer greater than or equal to 2. In the switch unit, first ends of any two adjacent switches in the N+1 switches are respectively connected to two ends of one of the N electrochemical cells, and second ends of the any two adjacent switches are respectively connected to a first end and a second end of the switch unit. It may be understood that because the N electrochemical cells are connected in series, two ends of each electrochemical cell are respectively connected to one switch, two switches may be referred to as two adjacent switches, and a connection point of the two electrochemical cells that are connected in series is connected to a same switch. For example, the two ends of the electrochemical cell Bat2 in FIG. 3 are respectively connected to the switch $S_2$ and the switch $S_3$, and the switch $S_2$ and the switch $S_3$ are the two adjacent switches. The connection point of the electrochemical cell Bat2 and the electrochemical cell Bat3 that are connected in series in FIG. 3 is connected to the same switch $S_3$. Herein, the switch in the switch unit may be an insulated-gate bipolar transistor (insulated-gate bipolar transistor, IGBT), a metal-oxide-semiconductor field-effect transistor (metal-oxide-semiconductor field-effect transistor, MOSFET), or the like, and may be specifically determined based on an actual application scenario.

In the battery pack, both the sampling circuit and the power balancing circuit may be connected to the first end and the second end of the switch unit. The sampling circuit in the battery pack may be configured to obtain a power parameter of each of the N electrochemical cells by turning on or off the N+1 switches in the switch unit. The N power parameters may be obtained in a complete sampling process. For example, as shown in FIG. 3, in the complete sampling process, the switch $S_1$ and the switch $S_2$ in the switch unit may be turned on, other switches are turned off, and the sampling circuit obtains the power parameter of the electrochemical cell Bat1; and then, the switch $S_2$ in the switch unit maintains on, the switch $S_3$ is turned on, other switches are turned off, and the sampling circuit obtains the power parameter of the electrochemical cell Bat2. This process is repeated until the sampling circuit obtains the power parameter of the electrochemical cell BatN. Herein, the power parameter of the electrochemical cell may include but is not limited to parameters such as an SOC, a voltage, and a current of the electrochemical cell.

The power balancing circuit in the battery pack may be configured to perform power balancing on at least one electrochemical cell in the N electrochemical cells based on the N power parameters obtained by the sampling circuit, so that a power difference between the N electrochemical cells in the battery pack is reduced after the at least one electrochemical cell is charged or discharged. Herein, performing power balancing on the electrochemical cell includes charging processing on a low-power electrochemical cell and discharging processing on a high-power electrochemical cell. The balanced electrochemical cell may be charged or discharged through power balancing. After power balancing is performed, the power difference between the N electrochemical cells is reduced. For example, a difference between a maximum value and a minimum value in the power parameters of the N electrochemical cells is reduced. In this way, power conditions of each of the N electrochemical cells in the battery pack may be obtained based on the N power parameters obtained by the sampling circuit. In addition, power balancing is performed, based on a specific power condition, on the at least one electrochemical cell that requires power balancing, so that the power difference between the electrochemical cells can be reduced, thereby reducing an inconsistency between the N electrochemical cells and improving durability and available capacity of the entire battery pack.

In an embodiment of this application, the battery pack may further include a control unit. The control unit may control the sampling circuit to perform sampling at an appropriate moment, and control the power balancing circuit to work when power balancing needs to be performed on the electrochemical cell. The control unit may be independent of another unit in the battery pack, or may be integrated into another unit or circuit in the battery pack. This is not limited in this application.

In an embodiment of this application, the battery pack may further include a power conversion circuit (not shown in FIG. 3 to FIG. 6). The power conversion circuit may be connected to the battery unit, and the power conversion circuit may be configured to input received electric energy to the battery unit, and output electric energy stored in the battery unit. In actual application, the power conversion circuit may input, when receiving a first control signal, electric energy provided by the outside to the battery unit, so that the battery pack implements a charge function. The power conversion circuit may further output, when receiving a second control signal, the electric energy stored in the battery unit to a load that is connected to the battery pack, so that the battery pack implements a discharge function. The first control signal and the second control signal may be sent by the control unit in the battery pack. The power conversion circuit may be a direct current/direct current converter circuit.

In an embodiment of this application, the sampling circuit in the battery pack may perform, at an interval of first duration (represented by T1), sampling again after each sampling ends. In each sampling process, the sampling circuit may be configured to: within second duration (represented by T2), obtain the power parameter of each of the N electrochemical cells by turning on or off the N+1 switches in the switch unit. After single sampling by the sampling circuit ends, the power balancing circuit in the battery pack may be configured to: within the first duration after the sampling process, perform power balancing on the at least one electrochemical cell in the N electrochemical cells based on the N power parameters obtained by the sampling circuit in the sampling process. For example, in the battery pack shown in FIG. 3, in a sampling process, the sampling circuit first works for a period of time, and respectively controls, within the working duration T2, two switches that are connected to two ends of each of the N electrochemical cells to be turned on, to obtain the N power parameters. After the working duration T2 is reached, if it is determined, based on the N power parameters, that power balancing needs to be performed on the electrochemical cell, the power balancing circuit works for a period of time, so that the at least one electrochemical cell on which power balancing needs to be performed is charged or discharged within the working duration T1. After the power balancing circuit works for the working duration T1, the sampling circuit performs next sampling, works again for a period of time, and obtains the N power parameters within the working duration T2. Then, when being needed to work, the power balancing circuit works again for a period of time. When the working duration T1 is reached, the power balancing circuit stops working, and the sampling circuit performs sampling again. This process is repeated until the power balancing circuit does not need to work. It may be understood that after it is determined that the balancing circuit does not need to work, the sampling circuit may still perform sampling again at an interval of the first duration. In this embodiment of this application, after the power balancing circuit works for the first duration, power balancing may not be implemented for the N battery packs. Therefore, when the sampling circuit performs sampling for a plurality of times, and results of the plurality of times of sampling indicate that power balancing needs to be performed, a corresponding power balancing circuit may work for a plurality of first duration until a sampling result that is reobtained by the sampling circuit indicates that power balancing is no longer needed, and the power balancing circuit stops working. In this way, sampling may be performed again after balancing is performed for a period of time, to determine whether balancing is needed. This helps make the power balancing circuit stop working in time after balancing is completed, thereby improving balancing efficiency and avoiding over-balancing. Balancing can reduce the inconsistency between the electrochemical cells, improve safety of the battery pack, and improve the durability and capacity of the entire battery pack.

FIG. 4 is a schematic of another structure of the battery pack according to this application. As shown in FIG. 4, the power balancing circuit in the battery pack shown in FIG. 3 may include a first balancing circuit. Herein, the first balancing circuit may be configured to: when the N electrochemical cells include a first electrochemical cell, perform power balancing on the first electrochemical cell in the battery unit. A difference between a power parameter of the first electrochemical cell and an average value of the N power parameters is greater than a first threshold. It may be understood that after performing each sampling, the sampling circuit may determine, based on the N power parameters obtained in the sampling process, whether the N electrochemical cells in the battery pack include the first electrochemical cell. The first electrochemical cell is an electrochemical cell with a large power parameter in the N electrochemical cells. Performing power balancing on the first electrochemical cell refers to performing passive balancing on the first electrochemical cell, so that the first electrochemical cell is discharged. Performing passive balancing on the first electrochemical cell may consume power of the first electrochemical cell, so that the power parameter, obtained after balancing is performed, of the first electrochemical cell can approach an average value of power parameters of all electrochemical cells, and the power difference between the N electrochemical cells is reduced. Herein, the first threshold may be set based on an actual requirement. The first balancing circuit may include passive balancing circuits of various topologies. When the first balancing circuit works, the first electrochemical cell may release a part of electric energy.

When the first balancing circuit performs passive balancing on the first electrochemical cell, two switches that are in the switch unit and that are connected to the first electrochemical cell are in an on state, so that the first electrochemical cell can be connected to the first balancing circuit. For example, as shown in FIG. 4, when the first electrochemical cell is the electrochemical cell Bat1 in FIG. 4, the two switches $S_1$ and $S_2$ that are connected to the electrochemical cell Bat1 are in the on state. When the first balancing circuit works, the first electrochemical cell may release a part of electric energy. After balancing, the power parameter of the first electrochemical cell is reduced, so that the difference between the power parameter of the first electrochemical cell and the average value of the power parameters of all electrochemical cells is reduced, thereby reducing the inconsistency between the N electrochemical cells and improving the available capacity and a service life of the entire battery pack.

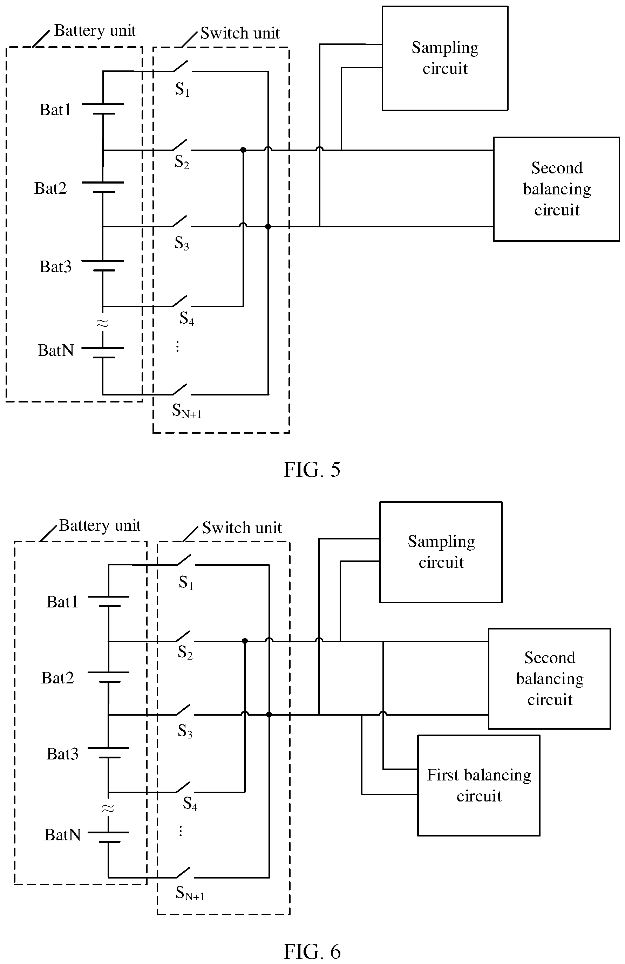

FIG. 5 is a schematic of still another structure of the battery pack according to this application. As shown in FIG. 5, the power balancing circuit in the battery pack shown in FIG. 3 may include a second balancing circuit. Herein, the second balancing circuit may be configured to: when the N electrochemical cells include a second electrochemical cell, perform power balancing on the second electrochemical cell in the battery unit. A difference between an average value of the N power parameters and a power parameter of the second electrochemical cell is greater than a second threshold. It may be understood that after performing each sampling, the sampling circuit may determine, based on the N power parameters obtained in the sampling process, whether the N electrochemical cells in the battery pack include the second electrochemical cell. The second electrochemical cell is an electrochemical cell with a small power parameter in the N electrochemical cells. Performing power balancing on the second electrochemical cell refers to performing active balancing on the second electrochemical cell, so that the second electrochemical cell is charged. Performing active balancing on the second electrochemical cell may supplement energy to the second electrochemical cell, so that the power parameter, obtained after balancing is performed, of the second electrochemical cell can approach an average value of power parameters of the N electrochemical cells, and the power difference between the N electrochemical cells is reduced. Herein, the second threshold may be set based on an actual requirement. The second threshold and the first threshold may be a same value, or may be different values. The second balancing circuit may include active balancing circuits of various topologies. When the second balancing circuit works, electric energy can be supplemented to the second electrochemical cell.

When the second balancing circuit performs active balancing on the second electrochemical cell, two switches that are in the switch unit and that are connected to the second electrochemical cell are in an on state, so that the second electrochemical cell can be connected to the second balancing circuit. For example, as shown in FIG. 5, when the second electrochemical cell is the electrochemical cell Bat2 in FIG. 5, the two switches $S_2$ and $S_3$ that are connected to the electrochemical cell Bat2 are in the on state. When the second balancing circuit works, electric energy can be supplemented to the second electrochemical cell, so that the difference between the power parameter of the second electrochemical cell and the average value of the power parameters of all electrochemical cells in the battery pack is reduced, thereby reducing the inconsistency between the electrochemical cells and improving the available capacity and a service life of the entire battery pack.

FIG. 6 is a schematic of yet another structure of the battery pack according to this application. As shown in FIG. 6, the power balancing circuit in the battery pack shown in FIG. 3 may include a first balancing circuit and a second balancing circuit. Both the second balancing circuit and the first balancing circuit are connected to the first end and the second end of the switch unit. Herein, the first balancing circuit may be configured to: when the N electrochemical cells include a first electrochemical cell but do not include a second electrochemical cell, perform power balancing on the first electrochemical cell in the battery unit. Herein, a difference between a power parameter of the first electrochemical cell and an average value of the N power parameters is greater than a first threshold. A difference between the average value of the N power parameters and a power parameter of the second electrochemical cell is greater than a second threshold. The second electrochemical cell is different from the first electrochemical cell. In addition, the second balancing circuit may be configured to: when the N electrochemical cells include the second electrochemical cell but do not include the first electrochemical cell, perform power balancing on the second electrochemical cell. It may be understood that the power parameter of the first electrochemical cell is larger than the average value of the N power parameters. Therefore, the power parameter of the first electrochemical cell is large, and passive balancing needs to be performed on the first electrochemical cell, to enable the first electrochemical cell to release a part of energy. In addition, the power parameter of the second electrochemical cell is smaller than the average value of the N power parameters. Therefore, the power parameter of the second electrochemical cell is small, and active balancing needs to be performed on the second electrochemical cell, to supplement a part of energy to the second electrochemical cell. When power balancing is performed on the first electrochemical cell and power balancing is performed on the second electrochemical cell, the two switches that are connected to the first electrochemical cell and the two switches that are connected to the second electrochemical cell need to be turned on respectively. In addition, the switch unit is reused by the first balancing circuit and the second balancing circuit. Therefore, performing power balancing on the first electrochemical cell and the second electrochemical cell requires that the corresponding switches be turned on at different moments, and cannot be performed at the same time. In this case, when the N electrochemical cells include only the first electrochemical cell, the first balancing circuit may be used to perform power balancing on the first electrochemical cell, to reduce the difference between the power of the first electrochemical cell and the average power value of all electrochemical cells, reduce the inconsistency between the electrochemical cells, and improve the available capacity of the battery pack. When the N electrochemical cells include only the second electrochemical cell, the second balancing circuit may be used to perform power balancing on the second electrochemical cell, to reduce the difference between the power of the second electrochemical cell and the average power value of all electrochemical cells, reduce the inconsistency between the electrochemical cells, and improve the available capacity of the battery pack. In this way, the two balancing circuits in the battery pack may respectively implement an active balancing function and a passive balancing function, so that power of both a high-power electrochemical cell and a low-power electrochemical cell can approach the average power value of all electrochemical cells, thereby improving balancing efficiency and helping improve a service life of the battery pack.

In an embodiment of this application, after a sampling process by the sampling circuit ends, when the N electrochemical cells include both the first electrochemical cell and the second electrochemical cell, working processes of the first balancing circuit and the second balancing circuit may be arranged based on a specific policy. For example, one of the first balancing circuit and the second balancing circuit may be preferentially selected, based on a relationship between a first difference and a second difference, to work. Specifically, when the N electrochemical cells include both the first electrochemical cell and the second electrochemical cell, and the first difference is greater than the second difference, the first balancing circuit may be further configured to perform power balancing on the first electrochemical cell within the first duration following the end of the sampling. Herein, the first difference is the difference between the power parameter of the first electrochemical cell and the average value of the N power parameters. The second difference is the difference between the average value of the N power parameters and the power parameter of the second electrochemical cell. When the N electrochemical cells include both the first electrochemical cell and the second electrochemical cell, and the first difference is less than the second difference, the second balancing circuit may be further configured to perform power balancing on the second electrochemical cell within the first duration following the end of the sampling. When the N electrochemical cells include both the first electrochemical cell and the second electrochemical cell, and the first difference is equal to the second difference, selecting the first balancing circuit to work may be preset, or selecting the second balancing circuit to work may also be preset. This is not limited in this application. In this way, when the N electrochemical cells include both the first electrochemical cell and the second electrochemical cell, based on a magnitude relationship between the first difference and the second difference, the first balancing circuit or the second balancing circuit is enabled to preferentially work. Then, power balancing can be performed on an electrochemical cell whose power parameter more greatly differs from the average value of the N power parameters, thereby more quickly reducing the power difference between the electrochemical cells, reducing the inconsistency between the electrochemical cells, and improving the available capacity and the service life of the entire battery pack.

In an embodiment of this application, when the N electrochemical cells include both the first electrochemical cell and the second electrochemical cell, one of the first balancing circuit and the second balancing circuit may be further arranged to preferentially work based on another policy. For example, if in some scenarios, it is more important to perform power balancing on the low-power electrochemical cell, the second balancing circuit may always be selected to preferentially work. For another example, if in some scenarios, it is more important to perform power balancing on the high-power electrochemical cell, the first balancing circuit may always be selected to preferentially work. This is not limited in this application.

In an embodiment of this application, after a sampling process by the sampling circuit ends, when the N electrochemical cells include both the first electrochemical cell and the second electrochemical cell, the first balancing circuit and the second balancing circuit may be further arranged to switch to work in turn. In other words, when the N electrochemical cells include the first electrochemical cell and the second electrochemical cell, the first balancing circuit and the second balancing circuit may be further configured to alternately work within the first duration after the sampling process.

For example, the sampling circuit obtains the power parameters of the N electrochemical cells after each sampling. A sampling result obtained after one sampling process ends includes the N power parameters. After a sampling process by the sampling circuit ends, it may be determined, based on a sampling result obtained after the sampling, that the N electrochemical cells include the first electrochemical cell and the second electrochemical cell. For example, the N power parameters obtained after the sampling meet:

$$\text{Vmax} - \text{Vavg} > \text{Tth1 and Vavg} - \text{Vmin} > \text{Tth2}$$

Vmax is a maximum value in the N power parameters, Vmin is a minimum value in the N power parameters, Vavg is the average value of the N power parameters, Tth1 is the first threshold, and Tth2 is the second threshold.

Then, after the sampling ends, in a period of time T1, the first balancing circuit may work for a short period of time $\text{Ta}_1$, the second balancing circuit may work for a short period of time $\text{Tb}_1$, the first balancing circuit continues to work for a short period of time $\text{Ta}_2$, and the second balancing circuit continues to work for a short period of time $\text{Tb}_2$... This process repeats for n times (n may be an integer greater than or equal to 1). A sum of working time of the two balancing circuits is $\text{Ta}_1 + \text{Tb}_1 + ... + \text{Ta}_n + \text{Tb}_n = \text{T1}$. After the two balancing circuits both stop working, the sampling circuit still performs sampling again at an interval of the period of time T1.

In this way, in the battery pack, not only passive balancing can be performed on the high-power electrochemical cell, but also active balancing can be performed on the low-power electrochemical cell, so that the power of both the high-power electrochemical cell and the low-power electrochemical cell can approach the average power value of all electrochemical cells. Enabling the two balancing circuits to alternately work can more quickly reduce the power difference between the electrochemical cells, thereby improving the balancing efficiency, helping reduce the inconsistency between the electrochemical cells, and improving the available capacity and the service life of the battery pack.

In an embodiment of this application, when results of a plurality of consecutive times of sampling all indicate that the N electrochemical cells include the first electrochemical cell and the second electrochemical cell, the first balancing circuit and the second balancing circuit may also be arranged to alternately work within a plurality of first duration following the end of the plurality of sampling processes. Specifically, after a single sampling process by the sampling circuit ends, when it is determined that the N electrochemical cells include the first electrochemical cell and the second electrochemical cell after the sampling process or a previous sampling process of the sampling process end, and the first balancing circuit works within the first duration following the previous sampling process, the second balancing circuit may be further configured to work within the first duration after the sampling process. When it is determined that the N electrochemical cells include the first electrochemical cell and the second electrochemical cell after the sampling process or the previous sampling process of the sampling process end, and the second balancing circuit works within the first duration following the previous sampling process, the first balancing circuit may be further configured to work within the first duration after the sampling process. For example, the sampling circuit performs sampling according to a specific rule, and obtains the power parameters of the N electrochemical cells after each sampling. A result of each sampling includes the N power parameters. After the sampling circuit performs the $\text{S}^{\text{th}}$ sampling, when it is determined that the N electrochemical cells include the first electrochemical cell and the second electrochemical cell, the first balancing circuit may be enabled to work within the duration T1 following the $\text{S}^{\text{th}}$ sampling. After the sampling circuit performs the $(\text{S}+1)^{\text{th}}$ sampling, when it is determined again that the N electrochemical cells include the first electrochemical cell and the second electrochemical cell, the second balancing circuit may be enabled to work within the duration T1 following the $(\text{S}+1)^{\text{th}}$ sampling. It may be understood that after the sampling circuit performs the $(\text{S}+2)^{\text{th}}$ sampling, if the N electrochemical cells include only the second electrochemical cell, the second balancing circuit should be enabled to work within the duration T1 following the $(\text{S}+2)^{\text{th}}$ sampling, and the foregoing arrangement logic of alternately working is no longer used. In this way, the two balancing circuits are arranged to alternately work within a plurality of first duration after a plurality of consecutive times of sampling, and not only passive balancing can be performed on the high-power electrochemical cell, but also active balancing can be performed on the low-power electrochemical cell, so that the power of both the high-power electrochemical cell and the low-power electrochemical cell can approach the average power value of all electrochemical cells. Consequently, the power difference between the electrochemical cells can be more quickly reduced, thereby improving the balancing efficiency, helping reduce the inconsistency between the electrochemical cells, and improving the available capacity and the service life of the battery pack.

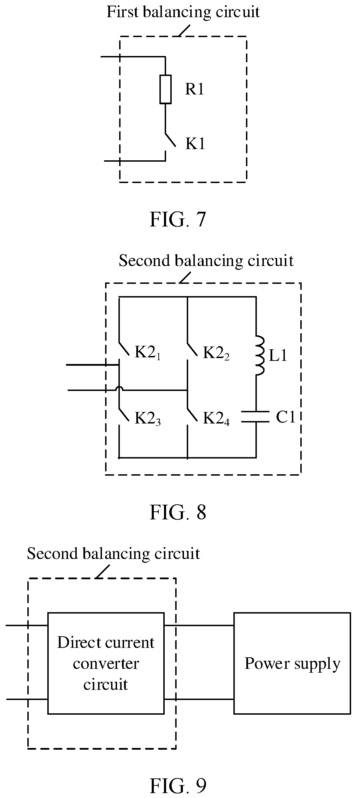

In an embodiment of this application, as shown in FIG. 7, the first balancing circuit may include a first balancing switch (for example, K1 in FIG. 7) and a first balancing resistor (for example, R1 in FIG. 7) that are connected in series. The first balancing switch and the first balancing resistor that are connected in series are connected between the first end and the second end of the switch unit. It may be understood that when the first balancing circuit works, the two switches that are in the switch unit and that are connected to the two ends of the first electrochemical cell are turned on. In this case, the first balancing switch is turned on, a part of energy of the first electrochemical cell is consumed by the first balancing resistor, and the power of the first electrochemical cell is reduced. Consequently, the difference between the power parameter of the first electrochemical cell and the average value of the power parameters of the N electrochemical cells can be reduced, the inconsistency between the electrochemical cells in the battery pack can be reduced, and the service life of the battery pack can be prolonged. In addition, the first balancing circuit is simple in structure and requires a few components. The first balancing circuit is connected between the first end and the second end of the switch unit, and the first balancing circuit may be used to perform power balancing on any one of the N electrochemical cells, thereby greatly reducing a quantity of elements and facilitating integration.

In an embodiment of this application, a quantity of first balancing circuits included in the battery pack shown in FIG. 3 or FIG. 4 may be not limited to one. An example in which the battery pack includes two first balancing circuits is used. Both the two first balancing circuits may be connected to the first end and the second end of the switch unit. In the two first balancing circuits, an example of a structure of one first balancing circuit may be shown in FIG. 7. The other first balancing circuit may include a flyback converter circuit. A first end and a second end of the flyback converter circuit are respectively connected to the first end and the second end of the switch unit. A third end and a fourth end of the flyback converter circuit are configured to connect to two ends of an energy consumption element. The energy consumption element may include but is not limited to a resistor. When the flyback converter circuit works, a voltage between the first end and the second end of the flyback converter circuit is higher than a voltage between the third end and the fourth end of the flyback converter circuit. When it is determined, based on the N power parameters obtained by the sampling circuit, that power balancing needs to be performed on the first electrochemical cell, at least one of the two first balancing circuits works, so that energy of the first electrochemical cell is quickly consumed, thereby improving the balancing efficiency.

In an embodiment of this application, the second balancing circuit may include an energy storage element and a second balancing switch. The energy storage element and the second balancing switch are connected between the first end and the second end of the switch unit. Herein, the energy storage element may include a capacitor, an inductor, or a capacitor and an inductor that are connected in series. Optionally, the energy storage element may include a transformer. Herein, the energy storage element in the second balancing circuit may store some energy of the high-power electrochemical cell in the N electrochemical cells, and release the energy to the low-power electrochemical cell in the N electrochemical cells. Thus, energy between the electrochemical cells is transferred, and a difference between power of the second electrochemical cell and an average power value of the N electrochemical cells is reduced, thereby reducing the inconsistency between the electrochemical cells and improving the available capacity and the service life of the battery pack. Because the energy supplemented to the second electrochemical cell comes from another electrochemical cell in the N electrochemical cell, this manner achieves high balancing efficiency, a simple circuit structure, and low costs. For example, as shown in FIG. 8, the second balancing circuit may include a capacitor (namely, C1) and an inductor (namely, L1) that are connected in series, and four second balancing switches (namely, $K2_1$, $K2_2$, $K2_3$, and $K2_4$). In the battery pack, an example in which the high-power electrochemical cell and the low-power electrochemical cell are Bat1 and Bat3, respectively, is used. In this case, first, the two switches $S_1$ and $S_2$ that are connected to Bat1 may be controlled to be turned on, other switches in the switch unit may be controlled to be turned off, $K2_1$ and $K2_4$ in the second balancing circuit are controlled to be turned on, and $K2_3$ and $K2_2$ are controlled to be turned off, so that some energy of Bat1 is transferred to the capacitor C1 and the inductor L1. Then, $K2_3$ and $K2_2$ in the second balancing circuit are controlled to be turned on, $K2_1$ and $K2_4$ are controlled to be turned off, the two switches $S_3$ and $S_4$ that are connected to Bat3 are controlled to be turned on, other switches in the switch unit are controlled to be turned off, so that energy in the capacitor C1 and the inductor L1 is transferred to Bat3. In this way, in the second balancing circuit, the second balancing switches and the switches in the switch unit are controlled to be turned on and off, so that some energy of the high-power electrochemical cell in the N electrochemical cells can be stored through the capacitor C1 and the inductor L1 that are connected in series, and the energy can be released to the low-power electrochemical cell.

In another possible implementation, as shown in FIG. 9, the second balancing circuit may include a direct current converter circuit. A first end and a second end of the direct current converter circuit are respectively connected to the first end and the second end of the switch unit. A third end and a fourth end of the direct current converter circuit are configured to connect to a power supply. The power supply may be configured to supply energy to the second electrochemical cell. A topology of the direct current converter circuit may be of various types like a forward converter topology, a flyback converter topology, a buck (BUCK) converter topology, a boost (BOOST) converter topology, or the like. This is not limited in this application. When the second balancing circuit works, a voltage between the third end and the fourth end of the direct current converter circuit is higher than a voltage between the first end and the second end of the direct current converter circuit. The direct current converter circuit can supplement energy provided by the power supply to the second electrochemical cell, so that the difference between the power of the second electrochemical cell and the average power value of all electrochemical cells in the battery pack is reduced, thereby reducing the inconsistency between the electrochemical cells and improving the available capacity and the service life of the entire battery pack.

In an embodiment of this application, the power supply may include an external power supply. The external power supply is located outside the battery pack. For example, the external power supply may be a direct current power supply connected when the battery pack is charged. This is not limited in this application. In this way, the external power supply may be used to perform active balancing on the low-power second electrochemical cell in the battery pack, so that the second electrochemical cell quickly obtains energy, and the inconsistency between the electrochemical cells can be reduced, thereby improving the capacity and the durability of the battery pack. Alternatively, when the second balancing circuit shown in FIG. 9 includes a direct current converter circuit, a third end and a fourth end of the direct current converter circuit may be connected to the battery unit in the battery pack. It should be noted that when the third end and the fourth end of the direct current converter circuit are connected to the battery unit, a circuit topology of the direct current converter circuit is an isolated circuit topology such as a forward converter topology or a flyback converter topology, which can improve safety of the battery pack. In this way, energy of all electrochemical cells in the battery unit may be used to supplement energy to the second electrochemical cell, thereby implementing active balancing. In addition, no external power supply needs to be connected, and the circuit can be simplified and be easy to use, thereby improving the capacity of the battery pack and increasing the balancing efficiency.

In an embodiment of this application, when the second balancing circuit includes the direct current converter circuit, the second balancing circuit may be configured to adjust a switch duty cycle in the second balancing circuit based on a balancing speed requirement and the power parameters of the N electrochemical cells, to increase or decrease a balancing current. Herein, the balancing speed requirement is determined based on an actual scenario. When the difference between the power parameters of the N electrochemical cells is large, and power balancing needs to be completed as soon as possible, the switch duty cycle in the direct current converter circuit may be adjusted to increase the balancing current, thereby increasing a speed of supplementing energy to the second electrochemical cell, increasing a speed of keeping power of electrochemical cells consistent, reducing a quantity of balancing times, and simplifying an operation. When the difference between the power parameters of the N electrochemical cells is small, the switch duty cycle in the direct current converter circuit may be adjusted to make the balancing current become appropriate, thereby controlling a speed and time for completing balancing.

In an embodiment of this application, the sampling circuit or any balancing circuit in the battery pack works when any switch in the switch unit is turned on. It may be understood that when any one of the sampling circuit, the first balancing circuit, and the second balancing circuit in the battery pack works, switches in the switch unit need to cooperate to be turned on or off. When any one of the circuits works, switches that need to cooperate to be turned on may be different. Therefore, when any one of the switches in the switch unit is turned on, any two of the three circuits cannot work at the same time. In other words, when any one of the switches in the switch unit is turned on, any one of the sampling circuit, the first balancing circuit, and the second balancing circuit works. In this way, all the three circuits are connected to the first end and the second end of the switch unit, so that a quantity of switches can be reduced while sampling and balancing functions are implemented, and circuit costs can be reduced. The three circuits work in different periods of time. Then, the switch unit can be reused, both active balancing and passive balancing can be implemented, and power of the high-power electrochemical cell and the low-power electrochemical cell can both approach the average power value, thereby improving the balancing speed and efficiency, helping reduce the inconsistency between electrochemical cells, and improving the capacity and the durability of the entire battery pack.

In an embodiment of this application, when the battery pack meets a fault condition, all balancing circuits in the battery pack stop working. The fault condition includes but is not limited to any one of the following: the sampling circuit is faulty; any one of the N power parameters obtained by the sampling circuit is greater than a third threshold; any one of the N power parameters obtained by the sampling circuit is less than a fourth threshold; a path between the sampling circuit and the switch unit is disconnected; and an environmental parameter of the battery pack exceeds a preset range. Herein, the environmental parameter may include but is not limited to an ambient temperature, ambient humidity, and the like. In this way, the balancing circuit in the battery pack can stop working in time when a fault occurs, so that a possibility of overcharge or overdischarge of the electrochemical cell in the battery pack can be reduced, and safety and the service life of the battery pack can be improved.

In this application, the sampling circuit and the power balancing circuit are disposed in the battery pack, and both the sampling circuit and the power balancing circuit are connected to the first end and the second end of the switch unit, so that the switch unit can be reused, thereby greatly reducing a quantity of switches. In addition, the plurality of electrochemical cells in the battery pack reuse the power balancing circuit through the switch unit. When the power balancing circuit can perform passive balancing on the electrochemical cells, the battery pack can reduce a quantity of circuits on which passive balancing is performed, thereby reducing costs. In addition, when the power balancing circuit includes the first balancing circuit and the second balancing circuit, the balancing circuits and the sampling circuit work in different periods of time. Then, active balancing on the low-power electrochemical cell in the battery pack and passive balancing on the high-power electrochemical cell can be implemented, so that power of the high-power electrochemical cell and the low-power electrochemical cell can both approach the average power value, thereby improving the balancing speed and efficiency, reducing the inconsistency between the electrochemical cells, and helping improve the capacity and the durability of the entire battery pack.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A battery pack, comprising a battery unit, a switch unit, a power balancing circuit, and a sampling circuit, wherein the battery unit comprises N electrochemical cells that are connected in series, and the switch unit comprises N+1 switches, wherein N is an integer greater than or equal to 2; first ends of any two adjacent switches in the N+1 switches are respectively connected to two ends of one of the N electrochemical cells, and second ends of the any two adjacent switches are respectively connected to a first end and a second end of the switch unit; and both the sampling circuit and the power balancing circuit are connected to the first end and the second end of the switch unit;

    the sampling circuit is configured to obtain a power parameter of each of the N electrochemical cells by turning on or off the N+1 switches; and
    the power balancing circuit is configured to perform power balancing on at least one electrochemical cell in the N electrochemical cells based on the N power parameters obtained by the sampling circuit, so that a power difference between the N electrochemical cells is reduced after the at least one electrochemical cell is charged or discharged.

2. The battery pack according to claim 1, wherein the sampling circuit performs, at an interval of first duration, sampling again after each sampling ends;

    in each sampling process, the sampling circuit is configured to: within second duration, obtain the power parameter of each of the N electrochemical cells by turning on or off the N+1 switches; and

after single sampling by the sampling circuit ends, the power balancing circuit is configured to: within the first duration after the sampling process, perform power balancing on the at least one electrochemical cell in the N electrochemical cells based on the N power parameters obtained by the sampling circuit in the sampling process.

3. The battery pack according to claim 1 or 2, wherein the power balancing circuit comprises a first balancing circuit; and
the first balancing circuit is configured to: when the N electrochemical cells comprise a first electrochemical cell, perform power balancing on the first electrochemical cell, wherein a difference between a power parameter of the first electrochemical cell and an average value of the N power parameters is greater than a first threshold.

4. The battery pack according to claim 1 or 2, wherein the power balancing circuit comprises a second balancing circuit; and
the second balancing circuit is configured to: when the N electrochemical cells comprise a second electrochemical cell, perform power balancing on the second electrochemical cell, wherein a difference between an average value of the N power parameters and a power parameter of the second electrochemical cell is greater than a second threshold.

5. The battery pack according to claim 2, wherein the power balancing circuit comprises a first balancing circuit and a second balancing circuit;

    the first balancing circuit is configured to: when the N electrochemical cells comprise a first electrochemical cell but do not comprise a second electrochemical cell, perform power balancing on the first electrochemical cell, wherein a difference between a power parameter of the first electrochemical cell and an average value of the N power parameters is greater than a first threshold, a difference between the average value of the N power parameters and a power parameter of the second electrochemical cell is greater than a second threshold, and the second electrochemical cell is different from the first electrochemical cell; and
    the second balancing circuit is configured to: when the N electrochemical cells comprise the second electrochemical cell but do not comprise the first electrochemical cell, perform power balancing on the second electrochemical cell.

6. The battery pack according to claim 5, wherein when the N electrochemical cells comprise the first electrochemical cell and the second electrochemical cell, and a first difference is greater than a second difference, the first balancing circuit is further configured to perform power balancing on the first electrochemical cell within the first duration after the sampling process, wherein the first difference is the difference between the power parameter of the first electrochemical cell and the average value of the N power parameters, and the second difference is the difference between the average value of the N power parameters and the power parameter of the second electrochemical cell; and
when the N electrochemical cells comprise the first electrochemical cell and the second electrochemical cell, and the first difference is less than the second difference, the second balancing circuit is further configured to perform power balancing on the second electrochemical cell within the first duration after the sampling process.

7. The battery pack according to claim 5, wherein when the N electrochemical cells comprise the first electrochemical cell and the second electrochemical cell, the first balancing circuit and the second balancing circuit are further configured to alternately work within the first duration after the sampling process.

8. The battery pack according to claim 5, wherein when the N electrochemical cells comprise the first electrochemical cell and the second electrochemical cell after the sampling process or a previous sampling process of the sampling process ends, and the first balancing circuit works within the first duration after the previous sampling process, the second balancing circuit is further configured to work within the first duration after the sampling process; and
when the N electrochemical cells comprise the first electrochemical cell and the second electrochemical cell after the sampling process or the previous sampling process of the sampling process ends, and the second balancing circuit works within the first duration after the previous sampling process, the first balancing circuit is further configured to work within the first duration after the sampling process.

9. The battery pack according to any one of claim 3 or claims 5 to 8, wherein the first balancing circuit comprises a first balancing switch and a second balancing resistor that are connected in series, and the first balancing switch and the first balancing resistor that are connected in series are connected between the first end and the second end of the switch unit.

10. The battery pack according to any one of claim 4 or claims 5 to 8, wherein the second balancing circuit comprises an energy storage element and a second balancing switch, the energy storage element and the second balancing switch are connected between the first end and the second end of the switch unit, and the energy storage element comprises a capacitor, an inductor, or a capacitor and an inductor that are connected in series.

11. The battery pack according to any one of claim 4 or claims 5 to 8, wherein the second balancing circuit comprises a direct current converter circuit, a first end and a second end of the direct current converter circuit are respectively connected to the first end and the second end of the switch unit, and a third end and a fourth end of the direct current converter circuit are configured to connect to a power supply.

12. The battery pack according to claim 11, wherein the power supply comprises an external power supply, and the external power supply is located outside the battery pack; or the third end and the fourth end of the direct current converter circuit are connected to the battery unit.

13. The battery pack according to any one of claims 1 to 12, wherein the sampling circuit or any balancing circuit in the battery pack works when any switch in the switch unit is turned on.

14. The battery pack according to any one of claims 1 to 13, wherein when the battery pack meets a fault condition, all balancing circuits in the battery pack stop working, wherein the fault condition comprises any one of the following:
the sampling circuit is faulty; any one of the N power parameters is greater than a third threshold; any one of the N power parameters is less than a fourth threshold; a path between the sampling circuit and the switch unit is disconnected; and an environmental parameter of the battery pack exceeds a preset range.

15. The battery pack according to any one of claims 1 to 14, wherein the battery pack further comprises a power conversion circuit, and the power conversion circuit is connected to the battery unit; and
the power conversion circuit is configured to input received electric energy to the battery unit, and output electric energy stored in the battery unit.

FIG. 1

FIG. 2

Battery pack

Battery unit          Switch unit

Bat1        $S_1$              Sampling
                              circuit
Bat2        $S_2$

Bat3        $S_3$

            $S_4$              Power
                              balancing
BatN        ⋮                 circuit

            $S_{N+1}$

FIG. 3

Battery unit          Switch unit

Bat1        $S_1$              Sampling
                              circuit
Bat2        $S_2$

Bat3        $S_3$

            $S_4$              First
                              balancing
BatN        ⋮                 circuit

            $S_{N+1}$

FIG. 4

FIG. 5

FIG. 6

First balancing circuit

FIG. 7

Second balancing circuit

FIG. 8

Second balancing circuit

FIG. 9

Europäisches
Patentamt

European
Patent Office

Office européen
des brevets

## EUROPEAN SEARCH REPORT

**Application Number**

EP 25 15 4499

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 277 078 A1 (HUAWEI DIGITAL POWER TECH CO LTD [CN]) 15 November 2023 (2023-11-15) * paragraphs [0075] - [0078], [0041], [0047], [0084], [0087]; figures 3,9,11 * ----- | 1-15 | INV. H02J7/00 |
| X | EP 4 236 017 A1 (HUAWEI DIGITAL POWER TECH CO LTD [CN]) 30 August 2023 (2023-08-30) * paragraphs [0006], [0010], [0020], [0021], [0032], [0036], [0067]; figure 1 * ----- | 1 | |

**TECHNICAL FIELDS SEARCHED (IPC)**

H02J
H01M

The present search report has been drawn up for all claims

| Place of search | Date of completion of the search | Examiner |
|---|---|---|
| Munich | 30 April 2025 | Pavlosyuk, Mikhail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                      

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4499

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | Publication date | Patent family member(s) | | Publication date |
|---|---|---|---|---|---|
| EP 4277078 | A1 | 15-11-2023 | CN | 114899906 A | 12-08-2022 |
| | | | EP | 4277078 A1 | 15-11-2023 |
| | | | US | 2023361582 A1 | 09-11-2023 |
| EP 4236017 | A1 | 30-08-2023 | CN | 114530910 A | 24-05-2022 |
| | | | EP | 4236017 A1 | 30-08-2023 |
| | | | US | 2023275440 A1 | 31-08-2023 |

EPO FORM P0459

For more details about this annex : see Official Journal of the European Patent Office, No. 12/82